(19) Europäisches Patentamt
European Patent Office
Office européen des brevets

(11) **EP 4 597 862 A1**

(12) **EUROPEAN PATENT APPLICATION**
published in accordance with Art. 153(4) EPC

(43) Date of publication:
**06.08.2025 Bulletin 2025/32**

(21) Application number: **23909978.1**

(22) Date of filing: **05.12.2023**

(51) International Patent Classification (IPC):
**H04B 7/0456** (2017.01)

(52) Cooperative Patent Classification (CPC):
**H04B 7/0456; H04B 7/06**

(86) International application number:
**PCT/CN2023/136315**

(87) International publication number:
**WO 2024/140048 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022 CN 202211699321**

(71) Applicant: **ZTE Corporation
Shenzhen, Guangdong 518057 (CN)**

(72) Inventors:
• **SI, Yuan
Shenzhen, Guangdong 518057 (CN)**
• **CHEN, Yijian
Shenzhen, Guangdong 518057 (CN)**
• **ZHANG, Shujuan
Shenzhen, Guangdong 518057 (CN)**
• **YU, Hongkang
Shenzhen, Guangdong 518057 (CN)**
• **JIAN, Mengnan
Shenzhen, Guangdong 518057 (CN)**

(74) Representative: **Aipex B.V.
Vestdijk 51
5611 CA Eindhoven (NL)**

(54) **CHANNEL INFORMATION ACQUISITION METHOD, COMMUNICATION DEVICE AND STORAGE MEDIUM**

(57)      Provided are a channel information acquisition method, a communication device and a storage medium. The channel information acquisition method applied by a first communication node includes: receiving a measurement reference signal; selecting a precoding matrix from a codebook according to the received measurement reference signal, where the precoding matrix is formed of vectors, a vector of the vectors is generated by a function, a first parameter and a second parameter in the function belong to a first candidate set and a second candidate set, respectively, and when elements in the second candidate set are arranged in sequence, the difference between two adjacent elements is different; and reporting the precoding matrix to a second communication node.

```
┌────────────────────────────────────────────────────────┐
│        Receive a measurement reference signal          │〜 S110
└────────────────────────────────────────────────────────┘
                            │
                            ▼
┌────────────────────────────────────────────────────────┐
│ Select a precoding matrix from a codebook according to │〜 S120
│      the received measurement reference signal         │
└────────────────────────────────────────────────────────┘
                            │
                            ▼
┌────────────────────────────────────────────────────────┐
│ Report the precoding matrix to a second communication  │〜 S130
│                        node                            │
└────────────────────────────────────────────────────────┘
```

**FIG. 1**

EP 4 597 862 A1

**Description**

TECHNICAL FIELD

The present application relates to the field of communications, specifically a channel information acquisition method, a communication device and a storage medium.

BACKGROUND

In the 5G standard specifications, channel state information (CSI) feedback is performed primarily by using codebooks while the performance of transmit precoding technology in multi-input multi-output (MIMO) depends more critically on the accuracy of codebook feedback.

In the existing 5G standards, the discrete Fourier transform (DFT) codebook is employed. The DFT codebook, as a far-field codebook, may lead to increased feedback errors during CSI feedback, consequently degrading communication system transmission performance. Although a variable, distance, has been introduced in a near-field codebook, the existing 5G standards have only partitioned the angle domain without implementing distance-domain partitioning.

SUMMARY

In view of the above, embodiments of the present application provide a channel information acquisition method, a communication device and a storage medium, thereby achieving the effect of distance-domain partitioning in the 5G standards, ensuring that channel state information can be accurately fed back by employing a codebook in the 5G standards, and avoiding degrading communication system transmission performance.

An embodiment of the present application provides a channel information acquisition method. The channel information acquisition method is applied by a first communication node and includes the following.

A measurement reference signal is received.

A precoding matrix is selected from a codebook according to the received measurement reference signal, where the precoding matrix is formed of vectors, a vector of the vectors is generated by a function, a first parameter and a second parameter in the function belong to a first candidate set and a second candidate set, respectively, and when the elements in the second candidate set are arranged in sequence, the difference between two adjacent elements is different.

The precoding matrix is reported to a second communication node.

An embodiment of the present application provides a channel information acquisition method. The channel information acquisition method is applied by a second communication node and includes the following.

A measurement reference signal is determined.

The measurement reference signal is sent to a first communication node.

A precoding matrix sent by the first communication node is received, where the precoding matrix is formed of vectors, a vector of the vectors is generated by a function, a first parameter and a second parameter in the function belong to a first candidate set and a second candidate set, respectively, and when the elements in the second candidate set are arranged in sequence, the difference between two adjacent elements is different.

The precoding matrix is used for downlink precoding.

An embodiment of the present application provides a communication device. The communication device includes a memory and one or more processors.

The memory is configured to store one or more programs.

When the one or more programs are executed by the one or more processors, the one or more processors are caused to perform the method in any of the preceding embodiments.

An embodiment of the present application provides a storage medium storing a computer program which, when executed by a processor, causes the processor to perform the method in any of the preceding embodiments.

BRIEF DESCRIPTION OF DRAWINGS

FIG. 1 is a flowchart of a channel information acquisition method according to an embodiment of the present application;

FIG. 2 is a flowchart of another channel information acquisition method according to an embodiment of the present application;

FIG. 3 is a block diagram of a channel information acquisition apparatus according to an embodiment of the present application;

FIG. 4 is a block diagram of another channel information acquisition apparatus according to an embodiment of the present application; and

FIG. 5 is a structural diagram of a communication device according to an embodiment of the present application.

DETAILED DESCRIPTION

Embodiments of the present application are described hereinafter in conjunction with drawings. The present application is described hereinafter in conjunction with embodiments and the drawings. The examples described hereinafter are intended to explain the present application and not to limit the scope of the present application.

In a wireless communication system, a transmitting end and a receiving end may use multiple antennas by means of spatial multiplexing to acquire a higher rate. Compared with a general spatial multiplexing method, an enhanced technique is that the receiving end feeds back channel information to the transmitting end and the transmitting end uses certain transmit precoding techniques according to the acquired channel information, greatly improving transmission performance. In single-user multi-input multi-output (SU-MIMO), channel feature vector information is directly used for precoding. In multi-user multi-input multi-output (MU-MIMO), more accurate channel information is required.

In the 5G standard specifications, channel state information (CSI) feedback is performed primarily by using codebooks while the performance of transmit precoding technology in MIMO depends more critically on the accuracy of codebook feedback. Here, the basic principle of codebook-based channel information quantization feedback is briefly explained as follows:

Assuming that a limited feedback channel capacity is $B$ bps/Hz, the number of available codewords is $N = 2^B$. The feature vector space of a channel matrix is quantized to form a codebook space $\Re = \{F_1, F_2 \cdots F_N\}$. The transmitting end and the receiving end jointly store or generate in real time the codebook (which is the same at the transceiving end). According to the channel matrix H obtained by the receiving end, the receiving end selects a codeword $\hat{F}$ which best matches the channel from $\Re$ according to a certain rule and feeds back the serial number $i$ of the codeword to the transmitting end. The serial number of the codeword is referred to as a precoding matrix indicator (PMI). The transmitting end finds a corresponding precoding codeword $\hat{F}$ according to the serial number $i$ and obtains the channel information, where $\hat{F}$ represents the feature vector information of the channel.

In the existing 5G standards, the discrete Fourier transform (DFT) vector is used as the basis vector of the codebook, and the resulting codebook is called a DFT codebook. The DFT codebook is designed according to the far-field assumption. When the distance between the transmitting end and the receiving end is long, the signal sent by the transmitting end may be approximately regarded as parallel incident onto the antenna array of the receiving end, and the DFT vector may be well quantized as a wireless channel, so the DFT codebook can reflect the channel state more accurately. However, when the distance between the transmitting end and the receiving end is short, the signal may no longer be regarded as parallel incident. Therefore, the DFT codebook in the 5G standards may lead to increased feedback errors during CSI feedback, consequently degrading communication system transmission performance.

To solve the above problems, the near-field codebook has been designed in the literature in recent years. In addition to the spatial-domain angle partitioning in the DFT codebook, the near-field codebook introduces the variable distance. By accurately modeling the distance, the near-field codebook may accurately reflect the near-field channel, so the near-field codebook also needs to partition the spatial-domain distance. However, the existing 5G standards only partition the angle domain without implementing distance-domain partitioning.

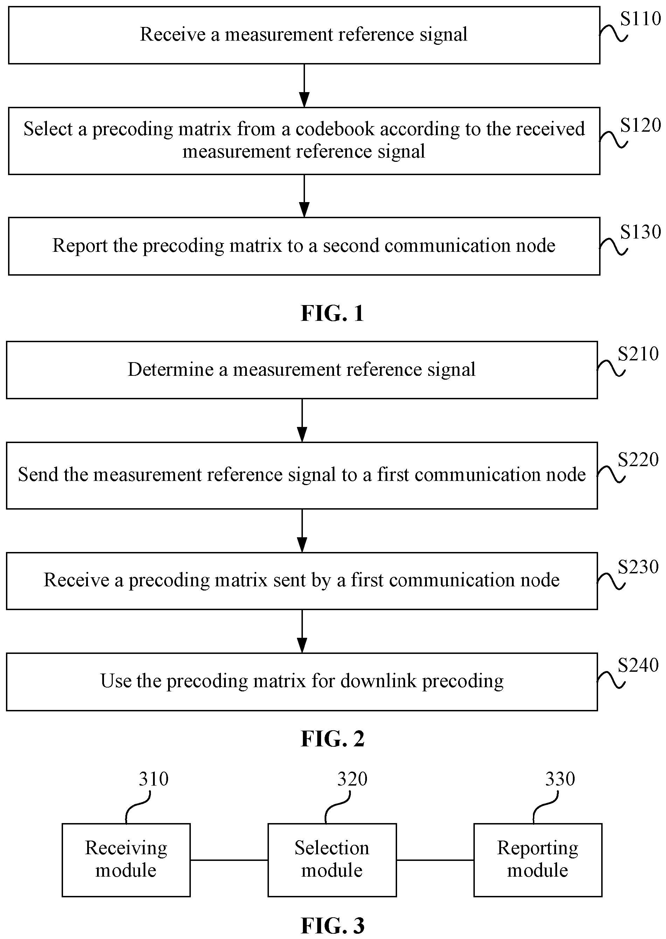

In an embodiment, FIG. 1 is a flowchart of a channel information acquisition method according to an embodiment of the present application. This embodiment is applicable to the partitioning of the distance domain of the codebook in the 5G standards. This embodiment may be executed by a first communication node. For example, the first communication node may be a user equipment (UE). As shown in FIG. 1, this embodiment includes S110 to S130.

In S110, a measurement reference signal is received.

The measurement reference signal may be used for measuring channel information between the first communication node and a second communication node, and the measurement reference signal may be sent by the second communication node. The first communication node may serve as a receiving end, and the second communication node may serve as a transmitting end.

In this embodiment, the manner of receiving the measurement reference signal is not specifically limited here.

In S120, a precoding matrix is selected from a codebook according to the received measurement reference signal.

The precoding matrix is formed of vectors, a vector of the vectors is generated by a function, and a first parameter and a second parameter in the function belong to a first candidate set and a second candidate set, respectively. When elements in the second candidate set are arranged in sequence, the difference between two adjacent elements is different.

The type of the codebook to be employed may be determined by the first communication node and the second communication node together, and the type of codebook is not specifically limited here. Different precoding matrices may be generated by changing the values of variables in the codebook.

In this embodiment, the first parameter is used for characterizing the angle-domain partitioning step size corresponding to the location (that is, the transmitting end, which may also be understood as the second communication node) where an antenna array is located, and the second parameter is used for characterizing the distance-domain partitioning step size corresponding to the location (that is, the transmitting end, which may also be understood as the second communication node) where the antenna array is located. The second parameter (that is, the distance-domain partitioning step size) may be different, that is, the distance domain of the transmitting end is partitioned according to an uneven partitioning rule.

In this embodiment, the precoding matrix may be formed of multiple vectors and determined by the first parameter and the second parameter. If the precoding matrix is formed of one-dimensional vectors, the vectors may include a first vector, and the first vector is generated by a first function $f_1(l, m)$. If the precoding matrix is formed of two-dimensional vectors, the vectors may include a first vector and a second vector, the first vector and the second vector may represent vectors of different dimensions, respectively, and the first vector and the second vector are generated by the first function $f_1(l, m)$ and a second function $f_2(l, m)$, respectively. In the above functions, $l$ represents the first parameter, and m represents the second parameter.

The difference between two adjacent elements in the first candidate set is an arithmetic sequence, and the difference in the arithmetic sequence is related to the oversampling coefficient. The elements in the second candidate set may be arranged in ascending order or descending order. The different difference between two adjacent elements may mean that if the difference between the first element and the second element is a and the difference between the second element and the third element is b, a and b are different values. Each element in the second candidate set has a corresponding index.

It is to be noted that the precoding matrix is determined by L first parameters selected from the first candidate set and L second parameters selected from the second candidate set. The first communication node may select values of L first parameters from the first candidate set and values of L second parameters from the second candidate set according to the received measurement signal, and report the selected values to the second communication node, where L is an integer greater than or equal to 1. After the first communication node selects the first parameter $l$ and the second parameter $m$, the first communication node determines the value of a parameter k in the codebook and feeds back the index of the first parameter, the index corresponding to the second parameter, and the value of the parameter k to the second communication node, that is, the transmitting end.

In S130, the precoding matrix is reported to the second communication node.

In this embodiment, after the first communication node determines the precoding matrix, the first communication node may report the precoding matrix to the second communication node so that the second communication node may use the precoding matrix for downlink precoding.

In this embodiment, the first communication node may select the second parameter from the second candidate set to determine the precoding matrix, and the difference between two adjacent elements in the second candidate set is different, thereby achieving the effect of distance-domain partitioning in the 5G standards, ensuring that channel state information can be accurately fed back by employing the codebook in the 5G standards, and avoiding degrading communication system transmission performance.

In an embodiment, the vectors include a first vector. Correspondingly, the first vector is generated by a first function, and the first function is defined by a first set of a first parameter and a second parameter.

In this embodiment, when the precoding matrix is formed of one-dimensional vectors, the vectors may only include a first vector. The first vector may be generated by a first function $f_1(l, m)$, and $f_1(l, m)$ may be defined by a first set of a first parameter $l$ and a second parameter $m$.

It is understood that one first vector corresponds to one first function, and one first function is defined by one set of parameters, and one set of parameters includes one first parameter and one second parameter.

In an embodiment, the precoding matrix is formed of the first preset number of first vectors, and the first preset number is an integer not less than 1.

The precoding matrix may be formed of at least one first vector.

In an embodiment, the vectors include a first vector and a second vector. Correspondingly, the first vector is generated by a first function, and the second vector is generated by a second function. The first function is defined by a first set of a first parameter and a second parameter, the second function is defined by a second set of a first parameter and a second parameter, and the second parameter in the first set of a first parameter and a second parameter and the second parameter in the second set of a first parameter and a second parameter belong to different second candidate sets, respectively.

In this embodiment, when the precoding matrix is formed of two-dimensional vectors, the vectors may include a first vector and a second vector. The first vector may be generated by a first function $t_1(l, m)$, and the second vector may be generated by a second function $f_2(l, m)$.

The values of the first set of a first parameter and a second parameter may be the same as or different from the values of the second set of a first parameter and a second parameter, and the first set of a first parameter and a second parameter and the second set of a first parameter and a second parameter are different sets of two parameters. The second parameter in the first set of a first parameter and a second parameter and the second parameter in the second set of a first parameter and a second parameter are selected from different second candidate sets, respectively.

In an embodiment, the precoding matrix is formed of the second preset number of first vectors and the third preset number of second vectors, and the second preset number and the third preset number are each an integer not less than 1.

The first preset number, the second preset number, and the third preset number are each an integer not less than 1, and the values of the first preset number, the second preset number, and the third preset number may be the same or different, which is not specifically limited here.

In an embodiment, the operation that the precoding matrix is reported to the second communication node includes one of the following operations.

The precoding matrix is reported in the form of an index to the second communication node.

The value of each element in the precoding matrix is reported to the second communication node.

In this embodiment, the precoding matrix is reported to the second communication node, that is, the receiving end in the following manner: the index of each first parameter and the index of each second parameter in the precoding matrix may be directly reported to the second communication node, that is, the transmitting end; or the value of each first parameter and the value of each second parameter in the precoding matrix may be reported to the second communication node.

In an embodiment, when the elements in the second candidate set are arranged in sequence, the difference between the reciprocals of two adjacent elements in the second candidate set is a constant value.

In this embodiment, the difference between the reciprocals of two adjacent elements in the second candidate set being a constant value may represent that the distance domain in the codebook is uniformly partitioned.

When the elements in the second candidate set are arranged in descending order or ascending order, the difference between the reciprocals of two adjacent elements in the second candidate set is a constant value.

In an embodiment, when the elements in the second candidate set are arranged in ascending order, each element in the second candidate set is acquired based on the preceding element of a current element.

In this embodiment, when the elements in the second candidate set are arranged in ascending order, the (i + 1)-th element in the second candidate set may be acquired based on the i-th element. For example, the second element may be acquired based on the first element, the third element may be acquired based on the second element, and so on until all the elements may be acquired.

In an embodiment, each element in the second candidate set is acquired in the following manner:

$$m_{i+1} = \frac{am_i}{a - 2m_i d}.$$

In the above formula, $a$ represents a real number whose value range is $[-1, 0)$ or $(0, 1]$, d represents a real number whose value range is $\left(0, \frac{1}{2m_1}\right)$, and $m_1$ represents the minimum element in the second candidate set.

In this embodiment, the (i + 1)-th element $m_{i+1}$ in the second candidate set is acquired based on the i-th element $m_i$ according to the above formula.

In an embodiment, the minimum element in the second candidate set is determined according to adjacent two of the dimension of the vector, the wavelength of the measurement reference signal and the antenna array aperture of the second communication node.

In this embodiment, the minimum element in the second candidate set may be determined according to the dimension of the vector and the wavelength of the measurement reference signal; the minimum element in the second candidate set may also be determined according to the wavelength of the measurement reference signal and the antenna array aperture of the second communication node.

When the vectors only include the first vector, the minimum element in the second candidate set may be determined according to the dimension of the first vector and the wavelength of the measurement reference signal. When the vectors include the first vector and the second vector, the minimum element in one second candidate set may be determined according to the dimension of the first vector and the wavelength of the measurement reference signal, and the minimum element in another second candidate set may be determined according to the dimension of the second vector and the wavelength of the measurement reference signal.

In an embodiment, the minimum element in the second candidate set is determined according to adjacent two of the dimension of the first vector, the wavelength of the measurement reference signal and the antenna array aperture of the second communication node.

The dimension of the first vector is 1.

In an embodiment, the different second candidate sets include a first second candidate set and a second second candidate set. The minimum element in the first second candidate set is determined according to adjacent two of the dimension of the first vector, the wavelength of the measurement reference signal and the antenna array aperture of the second communication node, and the minimum element in the second second candidate set is determined according to adjacent two of the dimension of the second vector, the wavelength of the measurement reference signal and the antenna array aperture of the second communication node.

The minimum elements in two different second candidate sets may be determined in the same manner. The dimension of the first vector and the dimension of the second vector are both one-dimensional, so the dimension of the first vector is 1 and the dimension of the second vector is also 1.

In an embodiment, the value of the minimum element is determined in the following manner.

The product of the square of the dimension of the vector and a first preset coefficient is multiplied by the wavelength of the measurement reference signal to obtain a first target value, and the reciprocal of the first target value is taken as the value of the minimum element.

In this embodiment, the corresponding formula is as follows:

$$m = \frac{1}{aN_1{}^2\lambda}.$$

In the above formula, $a$ represents the first preset coefficient, and its value may be 4; $N_1$ represents the dimension of the vector and may represent the dimension of the first vector or the dimension of the second vector; $\lambda$ represents the wavelength of the measurement reference signal.

In an embodiment, the value of the minimum element is determined in the following manner.

The product of the square of the antenna array aperture and a second preset coefficient is taken as a second target value.

The ratio of the wavelength of the measurement reference signal to the second target value is taken as the value of the minimum element.

In this embodiment, the corresponding formula is as follows:

$$m = \frac{\lambda}{b*D^2}.$$

In the above formula, $b$ represents the second preset coefficient, and its value may be 4; $\lambda$ represents the wavelength of the measurement reference signal; $D$ represents the antenna array aperture.

In an embodiment, the first vector and the second vector each include at least one element. The at least one element is the product of the first parameter and an index and/or the product of the second parameter and the square of an index. The index is the index of an element in the first vector or the second vector, and the value of the index starts from 0.

The first vector $t_1(l, m)$, is a vector including N1 elements, where at least one element is the product of the first parameter and $n_1$ and/or the product of the second parameter and the square of $n_1$, and $n_1$ is the index of the element in the first vector. The second vector $f_2(l, m)$ is a vector including N2 elements, where at least one element is the product of the first parameter and $n_2$ and/or the product of the second parameter and the square of $n_2$, and $n_2$ is the index of the element in the second vector.

It is to be noted that the value of the index starts from 0 and there are a total of n values, that is, 0 to n - 1.

An embodiment of the present application further provides another channel information acquisition method. FIG. 2 is a flowchart of another channel information acquisition method according to an embodiment of the present application. This embodiment is applicable to the partitioning of the distance domain of the codebook in the 5G standards. This embodiment is applied by a second communication node. For example, the second communication node may be a base station or a UE. In the scenario of wireless communications, the second communication node is a base station; in the scenario of sidelink communications, the second communication node is a UE. As shown in FIG. 2, the channel information acquisition in this embodiment includes S210 to S240.

In S210, a measurement reference signal is determined.

The measurement reference signal and the type of the codebook to be employed may be determined by the second communication node, and the type of codebook is not specifically limited here. Different types of codebooks may correspond to different codebook forms.

In S220, the measurement reference signal is sent to a first communication node.

In this embodiment, how the second communication node sends the measurement reference signal to the first communication node is not limited here.

In S230, a precoding matrix sent by the first communication node is received.

The precoding matrix is formed of vectors, a vector of the vectors is generated by a function, and a first parameter and a second parameter in the function belong to a first candidate set and a second candidate set, respectively. When elements in the second candidate set are arranged in sequence, the difference between two adjacent elements is different.

In this embodiment, the first parameter is used for characterizing the angle-domain partitioning step size corresponding to the location (that is, the transmitting end, which may also be understood as the second communication node) where an antenna array is located, and the second parameter is used for characterizing the distance-domain partitioning step size corresponding to the location (that is, the transmitting end, which may also be understood as the second communication node) where the antenna array is located. The second parameter (that is, the distance-domain partitioning step size) may be different, that is, the distance domain of the transmitting end is partitioned according to an uneven partitioning rule.

In this embodiment, the precoding matrix may be formed of multiple vectors and determined by the first parameter and the second parameter. If the precoding matrix is formed of one-dimensional vectors, the vectors may include a first vector, and the first vector is generated by a first function $f_1(l, m)$. If the precoding matrix is formed of two-dimensional vectors, the vectors may include a first vector and a second vector, the first vector and the second vector may represent vectors of different dimensions, respectively, and the first vector and the second vector are generated by the first function $f_1(l, m)$ and a second function $f_2(l, m)$ respectively. In the above functions, $l$ represents the first parameter, and m represents the second parameter.

In this embodiment, the precoding matrix may be received in two manners. In the first manner, values of L first parameters selected from the first candidate set and values of L second parameters selected from the second candidate set are received from the first communication node. In the second manner, the index of the first parameter, the index corresponding to the second parameter, and the value of a parameter k in the codebook are received from the first communication node. The first parameter and the second parameter may be used for long-term feedback or wideband feedback, and the parameter k may be used for short-term feedback or sub-band feedback.

In S240, the precoding matrix is used for downlink precoding.

The specific process of using the precoding matrix for downlink precoding is not described in detail here.

In this embodiment, the precoding matrix received by the second communication node is formed based on the second parameter selected from the second candidate set, and the difference between two adjacent elements in the second candidate set is different, thereby achieving the effect of distance-domain partitioning in the 5G standards, ensuring that channel state information can be accurately fed back by employing the codebook in the 5G standards, and avoiding degrading communication system transmission performance.

In an embodiment, the vectors include a first vector. Correspondingly, the first vector is generated by a first function, and the first function is defined by a first set of a first parameter and a second parameter.

In an embodiment, the precoding matrix is formed of the first preset number of first vectors, and the first preset number is an integer not less than 1.

In an embodiment, the vectors include a first vector and a second vector. Correspondingly, the first vector is generated by a first function, and the second vector is generated by a second function. The first function is defined by a first set of a first parameter and a second parameter, the second function is defined by a second set of a first parameter and a second parameter, and the second parameter in the first set of a first parameter and a second parameter and the second parameter in the second set of a first parameter and a second parameter belong to different second candidate sets, respectively.

In an embodiment, the precoding matrix is formed of the second preset number of first vectors and the third preset number of second vectors, and the second preset number and the third preset number are each an integer not less than 1.

In an embodiment, when the elements in the second candidate set are arranged in sequence, the difference between the reciprocals of two adjacent elements in the second candidate set is a constant value.

In an embodiment, when the elements in the second candidate set are arranged in ascending order, each element in the second candidate set is acquired based on the preceding element of a current element.

In an embodiment, each element in the second candidate set is acquired in the following manner:

$$m_{i+1} = \frac{am_i}{a - 2m_i d}.$$

In the above formula, *a* represents a real number whose value range is [-1, 0) or (0, 1], *d* represents a real number whose value range is $(0, \dfrac{1}{2m_1})$, and $m_1$ represents the minimum element in the second candidate set.

In an embodiment, the minimum element in the second candidate set is determined according to adjacent two of the dimension of the vector, the wavelength of the measurement reference signal and the antenna array aperture of the second communication node.

In an embodiment, the minimum element in the second candidate set is determined according to adjacent two of the dimension of the first vector, the wavelength of the measurement reference signal and the antenna array aperture of the second communication node.

In an embodiment, the different second candidate sets include a first second candidate set and a second second candidate set. The minimum element in the first second candidate set is determined according to adjacent two of the dimension of the first vector, the wavelength of the measurement reference signal and the antenna array aperture of the second communication node, and the minimum element in the second second candidate set is determined according to adjacent two of the dimension of the second vector, the wavelength of the measurement reference signal and the antenna array aperture of the second communication node.

In an embodiment, the value of the minimum element is determined in the following manner.

The product of the square of the dimension of the vector and a first preset coefficient is multiplied by the wavelength of the measurement reference signal to obtain a first target value.

The reciprocal of the first target value is taken as the value of the minimum element.

In an embodiment, the value of the minimum element is determined in the following manner.

The product of the square of the antenna array aperture and a second preset coefficient is taken as a second target value.

The ratio of the wavelength of the measurement reference signal to the second target value is taken as the value of the minimum element.

In an embodiment, the first vector and the second vector each include at least one element. The at least one element is the product of the first parameter and an index and/or the product of the second parameter and the square of an index. The index is the index of an element in the first vector or the second vector, and the value of the index starts from 0.

The channel information acquisition method is described in detail below through different embodiments.

Embodiment one

The measurement reference signal and the type of the codebook to be employed are determined. If both the transmitting end and the receiving end employ a Type I codebook, the codebook form may be expressed by the following formula:

$$W_{l,m,k} = \frac{1}{\sqrt{P}} \begin{bmatrix} v_{l,m} \\ \phi_k v_{l,m} \end{bmatrix} \qquad (1\text{-}1).$$

Different precoding matrices may be generated according to Formula (1-1) by changing the values of variables $l$, $m$, and $k$ in the codebook. In Formula (1-1), $P = 2N_1$, where $N_1$ represents the dimension of the first vector; $\Phi_k = e^{j\pi k/2}$ represents a polarization phase, where $k$, for example, may be a positive integer such as 0, 1, 2, and 3; $v_{l,m}$ represents the first vector which includes a total of $N_1$ elements and may be generated by the first function $f(l, m)$, that is, $v_{l,m} = f(l, m)$. The first function $f(l, m)$, includes two variables, the first parameter $l$ and the second parameter m, and two forms of expression $f(l, m)$ are given below.

Expression 1:

$$f(l,m) = \begin{bmatrix} e^{j\pi \frac{(1-l^2)}{m\lambda}} & e^{j\pi\left[\frac{(1-l^2)}{m\lambda} - \frac{2dl}{\lambda} + \frac{2d^2m}{\lambda}\right]} & \cdots & e^{j\pi\left[\frac{(1-l^2)}{m\lambda} - \frac{2(n-1)dl}{\lambda} + \frac{2(n-1)^2 d^2 m}{\lambda}\right]} & \cdots & e^{j\pi\left[\frac{(1-l^2)}{m\lambda} - \frac{2(N_1-1)dl}{\lambda} + \frac{2(N_1-1)^2 d^2 m}{\lambda}\right]} \end{bmatrix}^T$$

Expression 2:

$$f(l,m) = \left[ e^{j\pi \frac{(1-l^2)}{m}} \quad e^{j\pi\left[\frac{(1-l^2)}{m}-l+\frac{m}{2}\right]} \quad \ldots \quad e^{j\pi\left[\frac{(1-l^2)}{m}-(n-1)l+(n-1)^2\frac{m}{2}\right]} \quad \ldots \quad e^{j\pi\left[\frac{(1-l^2)}{m}-(N_1-1)l+(N_1-1)^2\frac{m}{2}\right]} \right]^T$$

In Expression 1, j represents an imaginary unit, $\lambda$ represents the wavelength of the measurement reference signal, $d$ represents the array element pitch at the transmitting end, that is, the second communication node, and $n$ represents the index of an element in the vector $f(l,m)$. At least one term in each of Expression 1 and Expression 2 is the product of the first parameter and $n$ and/or the product of the second parameter and the square of $n$, where $n$ is the index of an element in the first vector.

The receiving end, that is, the first communication node, selects a precoding matrix from the codebook according to the received measurement reference signal. The precoding matrix is formed of L first vectors $v_{l,m} = f(l,m)$ and determined by the first parameter $l$ and the second parameter $m$. The receiving end may select values of L first parameters from a first candidate set and values of L second parameters from a second candidate set according to the received measurement signal and report the selected values to the transmitting end, where L is an integer not less than 1.

The first candidate set is an arithmetic sequence, and the $i_{1,1}$-th element in the set is $l = \dfrac{2n}{N_1 O_1}$, where $O_1$ is an oversampling coefficient and is a positive integer. An example of the first candidate set is given below, as shown in Table 1:

Table 1

| $i_{1,1}$ | 0 | 1 | 2 | ... | $n$ | ... | $N_1 O_1 - 1$ |
|---|---|---|---|---|---|---|---|
| $l$ | 0 | $\dfrac{2}{N_1 O_1}$ | $\dfrac{4}{N_1 O_1}$ | ... | $\dfrac{2n}{N_1 O_1}$ | ... | $\dfrac{2N_1 O_1 - 2}{N_1 O_1}$ |

When the elements in the second candidate set are arranged in sequence, the difference between two adjacent elements in the second candidate set is different. If the index of the element in the set is represented by $i_{1,2}$, an example of the second candidate set is given below, as shown in Table 2:

Table 2

| $i_{1,2}$ | 0 | 1 | 2 | 3 | 4 | 5 |
|---|---|---|---|---|---|---|
| $m$ | 2 | 1 | $\dfrac{1}{2}$ | $\dfrac{1}{3}$ | $\dfrac{1}{5}$ | $\dfrac{1}{8}$ |

The second candidate set may be generated in the following manner: when the elements in the second candidate set are arranged in sequence, the difference between reciprocals of two adjacent elements is a constant value. The minimum element in the second candidate set is calculated according to the dimension $N_1$ of the first vector and the wavelength $\lambda$ of the measurement reference signal. If $N_1 = 32$ and $\lambda = 0.125$, the minimum element in the second candidate set is $m = \dfrac{1}{4N_1^2 \lambda} = \dfrac{1}{512}$. If the difference between reciprocals of two adjacent elements is 32, the second candidate set may be shown in Table 3:

Table 3

| $i_{1,2}$ | 0 | 1 | 2 | 3 | 4 | 5 | 6 | 7 |
|---|---|---|---|---|---|---|---|---|
| $m$ | $\dfrac{1}{512}$ | $\dfrac{1}{480}$ | $\dfrac{1}{448}$ | $\dfrac{1}{416}$ | $\dfrac{1}{384}$ | $\dfrac{1}{352}$ | $\dfrac{1}{320}$ | $\dfrac{1}{288}$ |
| $i_{1,2}$ | 8 | 9 | 10 | 11 | 12 | 13 | 14 | 15 |

(continued)

| $i_{1,2}$ | 0 | 1 | 2 | 3 | 4 | 5 | 6 | 7 |
|---|---|---|---|---|---|---|---|---|
| $m$ | $\dfrac{1}{256}$ | $\dfrac{1}{224}$ | $\dfrac{1}{192}$ | $\dfrac{1}{160}$ | $\dfrac{1}{128}$ | $\dfrac{1}{96}$ | $\dfrac{1}{64}$ | $\dfrac{1}{32}$ |

When the elements in the second candidate set are arranged in ascending order, the (i + 1)-th element in the set may be acquired based on the i-th element. The (i + 1)-th element $m_{i+1}$ in the second candidate set may be acquired based on the i-th element $m_i$ according to the following formula:

$$m_{i+1} = \frac{am_i}{a - 2m_i d}.$$

In the above formula, $a$ represents a real number whose value range is [-1, 0) or (0, 1], $d$ represents a real number whose value range is $(0, \frac{1}{2m_1})$, and $m_1$ represents the minimum element in the second candidate set. The minimum element $m_1$ in the second candidate set may aloe be calculated in the following manner: if an antenna array aperture is 0.5, a preset coefficient is 4, and the wavelength of the measurement reference signal is $\lambda = 0.0625$, then $m_1 = \frac{0.0625}{4*0.5^2} = \frac{1}{16}$. If $d = 0.5$ and $a=1$, the second candidate set generated according to the above formula is as follows:

$$m_2 = \frac{m_1}{1 - m_1} = \frac{1}{15}$$

$$m_3 = \frac{m_2}{1 - m_2} = \frac{1}{14}$$

... .

If the index of the element in the second candidate set is represented by $i_{1,2}$, the generated second candidate set is shown in Table 4:

Table 4

| $i_{1,2}$ | 0 | 1 | 2 | 3 | 4 | 5 | 6 | 7 |
|---|---|---|---|---|---|---|---|---|
| $m$ | $\dfrac{1}{16}$ | $\dfrac{1}{15}$ | $\dfrac{1}{14}$ | $\dfrac{1}{13}$ | $\dfrac{1}{12}$ | $\dfrac{1}{11}$ | $\dfrac{1}{10}$ | $\dfrac{1}{9}$ |
| $i_{1,2}$ | 8 | 9 | 10 | 11 | 12 | 13 | 14 | 15 |
| $m$ | $\dfrac{1}{8}$ | $\dfrac{1}{7}$ | $\dfrac{1}{6}$ | $\dfrac{1}{5}$ | $\dfrac{1}{4}$ | $\dfrac{1}{3}$ | $\dfrac{1}{2}$ | 1 |

When L is 1, the precoding matrix is formed of one first vector $v_{l,m}$. Therefore, the receiving end may select one first parameter and one second parameter from the first candidate set and the second candidate set respectively according to the received measurement reference signal, determine the value of the parameter k in Formula (1-1), and feed back the index $i_{1,1}$ of the first parameter, the index $i_{1,2}$ of the second parameter, and the value of the parameter k to the transmitting end, that is, the second communication node. The transmitting end may calculate the precoding matrix by using the indexes and the parameter k fed back by the receiving end according to Formula (1-1) and use the precoding matrix for downlink precoding.

Optionally, the first parameter *l* and the second parameter *m* may be used for long-term feedback or wideband feedback, and the parameter k may be used for short-term feedback or sub-band feedback.

Embodiment two

The codebook in Embodiment one may also be a Type II codebook, and the codebook form may be expressed by the following formula:

$$W_{l,m,k,p^{(1)},p^{(2)}} = \frac{1}{\sqrt{P\sum_{i=0}^{2L-1}(p_i^{(1)}p_i^{(2)})^2}}\left[\begin{array}{c}\sum_{i=0}^{L-1}v_{l_i,m_i}p_i^{(1)}p_i^{(2)}\varphi_{k_i}\\ \sum_{i=0}^{L-1}v_{l_i,m_i}p_{i+L}^{(1)}p_{i+L}^{(2)}\varphi_{k_{i+L}}\end{array}\right]$$

$$(2\text{-}1).$$

Different precoding matrices may be generated according to Formula (2-1) by changing the values of variables such as parameters $l,m,k,p^{(1)},p^{(2)}$ in the codebook. In Formula (2-1), $P = 2N_1$, where $N_1$ represents the dimension of the first vector $v_{l,m}$; $p_i^{(1)}$ represents a wideband amplitude coefficient; $p_i^{(2)}$ represents sub-band amplitude coefficient; in Type II feedback, the precoding matrix is formed of L first vectors $v_{l,m}$, where L may a positive integer; $\varphi_k = e^{j\pi k/2}$. The manners of acquiring $v_{l,m}$ and the second candidate set are the same as those in Embodiment one and are not repeated here.

After the receiving end, that is, the first communication node, receives the measurement reference signal, the receiving end may, according to the measurement reference signal, calculate L first vectors $v_{l_0,m_0}, v_{l_1,m_1}, v_{l_2,m_2}, ..., v_{l_{L-1},m_{L-1}}$ and the following values corresponding to the L first vectors:

broadband amplitudes: $p_0^{(1)}, p_1^{(1)}, p_2^{(1)}, ..., p_{L-1}^{(1)}, p_L^{(1)}, p_{L+1}^{(1)}, p_{L+2}^{(1)}, ..., p_{2L-1}^{(1)}$;

sub-band amplitudes: $p_0^{(2)}, p_1^{(2)}, p_2^{(2)}, ..., p_{L-1}^{(2)}, p_L^{(2)}, p_{L+1}^{(2)}, p_{L+2}^{(2)}, ..., p_{2L-1}^{(2)}$;

sub-band phases: $\varphi_{k_0}, \varphi_{k_1}, ..., \varphi_{k_{L-1}}, \varphi_{k_L}, \varphi_{k_{L+1}}, ..., \varphi_{k_{2L-1}}$.

The receiving end feeds back the above values to the transmitting end, that is, the second communication node. According to the first parameter *l*, the second parameter *m* and the amplitude coefficients $p_i^{(1)}, p_i^{(2)}$ fed back by the receiving end, that is, the first communication node, the transmitting end, that is, the second communication node, may calculate the precoding matrix by using Formula (2-1) and use the precoding matrix for downlink precoding.

Optionally, the broadband amplitudes $p_0^{(1)}, p_1^{(1)}, p_2^{(1)}, ..., p_{L-1}^{(1)}, p_L^{(1)}, p_{L+1}^{(1)}, p_{L+2}^{(1)}, ..., p_{2L-1}^{(1)}$, the selected L first parameters *l*, and the selected L second parameters *m* may be used for long-term feedback or wideband feedback.

Optionally, the sub-band amplitudes $p_0^{(2)}, p_1^{(2)}, p_2^{(2)}, ..., p_{L-1}^{(2)}, p_L^{(2)}, p_{L+1}^{(2)}, p_{L+2}^{(2)}, ..., p_{2L-1}^{(2)}$ and the sub-band phases $\varphi_{k_0}, \varphi_{k_1}, ..., \varphi_{k_{L-1}}, \varphi_{k_L}, \varphi_{k_{L+1}}, ..., \varphi_{k_{2L-1}}$ may be used for short-term feedback or sub-band feedback.

Embodiment three

The codebook in Embodiment one may also be an enhanced Type II codebook, and in the enhanced Type II codebook, the precoding matrix is formed of L first vectors. The codebook form may be expressed by the following formula:

$$W_{l,m,p^{(1)},p^{(2)},M_v,y_t^{(f)},\varphi_{i,f}} = \frac{1}{\sqrt{P\gamma_t}}\begin{bmatrix} \sum_{i=0}^{L-1} v_{l_i,m_i} p_0^{(1)} \sum_{f=0}^{M_v-1} y_t^{(f)} p_{i,f}^{(2)}\varphi_{i,f} \\ \sum_{i=0}^{L-1} v_{l_i,m_i} p_1^{(1)} \sum_{f=0}^{M_v-1} y_t^{(f)} p_{i+L,f}^{(2)}\varphi_{i+L,f} \end{bmatrix}$$  (3-1).

$$\gamma_t = \sum_{i=0}^{2L-1}\left(p^{(1)}_{\left\lfloor\frac{i}{L}\right\rfloor}\right)^2\left|\sum_{f=0}^{M_v-1} y_t^{(f)} p_{i,f}^{(2)}\varphi_{i,f}\right|^2$$

In Formula (3-1), represents a normalization coefficient; $P = 2N_1$, where $N_1$ represents the dimension of the first vector $v_{l,m}$; $p_0^{(1)}$ and $p_1^{(1)}$ represent the polarization amplitudes of the broadband; $y_t^{(f)}$ represents an element in a basis vector for frequency-domain compression; $M_v$ represents the number of selected basis vectors for frequency-domain compression and is configured by the transmitting end; $p_{i,f}^{(2)}$ and $\varphi_{i,f}$ represent the amplitude and the phase coefficient of the basis vector for frequency-domain compression, respectively. The manners of acquiring $v_{l,m}$ and the second candidate set are the same as those in Embodiment one and are not repeated here. Different precoding matrices may be generated according to Formula (3-1) by changing the values of variables such as parameters $l,m,k,p^{(1)},p^{(2)}$ in the codebook.

After the receiving end, that is, the first communication node, receives the measurement reference signal, the receiving end may, according to the measurement reference signal, calculate L first vectors $v_{l0,m0}, v_{l1,m1}, v_{l2,m2}, ..., v_{lL-1,mL-1}$ and the following values corresponding to the L first vectors:

broadband polarization amplitudes: $p_0^{(1)}$ and $p_1^{(1)}$;

frequency-domain compression vectors: $y_t^0, y_t^1,..., y_t^{M_v-1}$;

amplitudes of frequency-domain compression vectors: $p_i^0, p_i^1, ... , p_i^{M_v-1}, p_{i+L}^0, p_{i+L}^1, ... , p_{i+L}^{M_v-1}$ ($i \in$ [0, $L$ - 1]);

phases of frequency-domain compression vectors: $\varphi_{i,0}, \varphi_{i,1}, ..., \varphi_{i,M_v-1}, \varphi_{i+L,0}, \varphi_{i+L,1}, ... , \varphi_{i+L,M_v-1}$ ($i \in$ [0, $L$ - 1]).

The receiving end feeds back the above values to the transmitting end, that is, the second communication node. After the transmitting end receives the above values reported by the receiving end, the transmitting end may calculate the precoding matrix according to Formula (3-1) and perform downlink precoding.

Embodiment four

The codebook in Embodiment one may also be represented by Formula (4-1), (4-2) or (4-3):

$$W_{l,l',m,m',k}^{(2)} = \frac{1}{\sqrt{2P}}\begin{bmatrix} v_{l,m} & v_{l',m'} \\ \varphi_k v_{l,m} & -\varphi_k v_{l',m'} \end{bmatrix}$$  (4-1)

$$W_{l,l',m,m',k}^{(2)} = \frac{1}{\sqrt{3P}}\begin{bmatrix} v_{l,m} & v_{l',m'} & v_{l,m} \\ \varphi_k v_{l,m} & \varphi_k v_{l',m'} & -\varphi_k v_{l,m} \end{bmatrix}$$  (4-2)

$$W^{(2)}_{l,l',m,m',k} = \frac{1}{\sqrt{4P}} \begin{bmatrix} v_{l,m} & v_{l',m'} & v_{l,m} & v_{l',m'} \\ \varphi_k v_{l,m} & \varphi_k v_{l',m'} & -\varphi_k v_{l,m} & -\varphi_k v_{l',m'} \end{bmatrix} \tag{4-3}.$$

In Formulas (4-1), (4-2) and (4-3), $v_{l,m}$ and $\varphi_k$ have the same meaning as in Embodiment one, the parameter $l,l'$ belongs to the first candidate set, and the parameter belongs to the second candidate set. The manners of acquiring the first candidate set and the second candidate set are the same as those in Embodiment one and are not repeated here.

Embodiment five

The codebook in Embodiment two may also be represented by Formula (5-1):

$$W_{l,m.k,p^{(1)},p^{(2)}} = \frac{1}{\sqrt{2}} \begin{bmatrix} W^1_{l,m.k,p^{(1)}_{i,1},p^{(2)}_{i,1}} & W^2_{l,m.k,p^{(1)}_{i,2},p^{(2)}_{i,2}} \end{bmatrix} \tag{5-1}.$$

In Formula (5-1),

$$W^b_{l,m.k,p^{(1)}_b,p^{(2)}_b} = \frac{1}{\sqrt{P\sum_{i=0}^{2L-1}(p^{(1)}_{b,i}p^{(2)}_{b,i})^2}} \begin{bmatrix} \sum_{i=0}^{L-1} v_{l_i,m_i} p^{(1)}_{b,i} p^{(2)}_{b,i} \varphi_{b,k_i} \\ \sum_{i=0}^{L-1} v_{l_i,m_i} p^{(1)}_{b,i+L} p^{(2)}_{b,i+L} \varphi_{b,k_{i+L}} \end{bmatrix} \tag{5-2}.$$

Embodiment six

The codebook in Embodiment three may also be in the following form:

$$W^{(2)}_{l,m,p^{(1)}_b,p^{(2)}_b,M_v,y^{(f)}_{t,b},\varphi_{i,b,f}} = \frac{1}{\sqrt{2}} \begin{bmatrix} W^1_{l,m,p^{(1)}_1,p^{(2)}_1,M_v,y^{(f)}_{t,1},\varphi_{i,1,f}} & W^2_{l,m,p^{(1)}_2,p^{(2)}_2,M_v,y^{(f)}_{t,2},\varphi_{i,2,f}} \end{bmatrix}$$

$$W^{(2)}_{l,m,p^{(1)}_b,p^{(2)}_b,M_v,y^{(f)}_{t,b},\varphi_{i,b,f}} = \frac{1}{\sqrt{3}} \begin{bmatrix} W^1_{l,m,p^{(1)}_1,p^{(2)}_1,M_v,y^{(f)}_{t,1},\varphi_{i,1,f}} & W^2_{l,m,p^{(1)}_2,p^{(2)}_2,M_v,y^{(f)}_{t,2},\varphi_{i,2,f}} & W^3_{l,m,p^{(1)}_3,p^{(2)}_3,M_v,y^{(f)}_{t,3},\varphi_{i,3,f}} \end{bmatrix}$$

$$W^{(2)}_{l,m,p^{(1)}_b,p^{(2)}_b,M_v,y^{(f)}_{t,b},\varphi_{i,b,f}}$$
$$= \frac{1}{2} \begin{bmatrix} W^1_{l,m,p^{(1)}_1,p^{(2)}_1,M_v,y^{(f)}_{t,1},\varphi_{i,1,f}} & W^2_{l,m,p^{(1)}_2,p^{(2)}_2,M_v,y^{(f)}_{t,2},\varphi_{i,2,f}} & W^3_{l,m,p^{(1)}_3,p^{(2)}_3,M_v,y^{(f)}_{t,3},\varphi_{i,3,f}} & W^4_{l,m,p^{(1)}_4,p^{(2)}_4,M_v,y^{(f)}_{t,4},\varphi_{i,4,f}} \end{bmatrix}.$$

In the above three formulas,

$$W^b_{l,m,p^{(1)}_b,p^{(1)}_b,M_v,y^{(f)}_{t,b},\varphi_{i,b,f}} = \frac{1}{\sqrt{P\gamma_{t,b}}} \begin{bmatrix} \sum_{i=0}^{L-1} v_{l_i,m_i} p^{(1)}_{b,0} \sum_{f=0}^{M_v-1} y^{(f)}_{t,b} p^{(2)}_{b,i,f} \varphi_{b,i,f} \\ \sum_{i=0}^{L-1} v_{l_i,m_i} p^{(1)}_{b,1} \sum_{f=0}^{M_v-1} y^{(f)}_{t,b} p^{(2)}_{b,i+L,f} \varphi_{b,i+L,f} \end{bmatrix}.$$

$$\gamma_{t,b} = \sum_{i=0}^{2L-1} \left( p_{b,\left\lfloor \frac{i}{L} \right\rfloor}^{(1)} \right)^2 \left| \sum_{f=0}^{M_v-1} y_{t,b}^{(f)} p_{b,i,f}^{(2)} \varphi_{b,i,f} \right|^2$$

In the above formula, ; $P = 2N_1$, where $N_1$ represents the dimension of the first vector; the parameter b is used for characterizing different transmission data layers; the parameters $v_{l,m}, p_b^{(1)}, p_b^{(2)}, M_v, y_{t,b}^{(f)}, \varphi_{i,b,f}$ have the same meaning as in Embodiment three and are not repeated here.

Embodiment seven

The precoding matrix may also be formed of a first vector and a second vector. The first vector and the second vector are generated by functions $f_1(l^{(1)},m^{(1)})$ and $f_2(l^{(2)},m^{(2)})$, respectively. The dimension of the first vector is $N_1$, and the dimension of the second vector is $N_2$. The first vector is calculated based on a first set of a first parameter and a second parameter $l^{(1)},m^{(1)}$, and the second vector is calculated based on a second set of a first parameter and a second parameter $l^{(2)},m^{(2)}$. The second parameters in the above two sets are derived from different second candidate sets, and the manner of acquiring the two second candidate sets is the same as the manner in Embodiment one. The minimum elements in the two second candidate sets are acquired in different manners.

An example of the generation of the two second candidate sets is given below. If $N_1 = 8, N_2 = 4$ and the wavelength of the measurement reference signal is $\lambda = 0.125$, the minimum element in the first second candidate set is

$$m_1^{(1)} = \frac{1}{4N_1^2\lambda} = \frac{1}{32}$$
, and the minimum element in the second second candidate set is
$$m_1^{(2)} = \frac{1}{4N_2^2\lambda} = \frac{1}{8}$$
.

The parameters $d_1 = 1, a_1 = 1$ and $d_2 = 0.5, a_1 = 1$ are configured, and two second candidate sets are calculated according to

$$m_{i+1} = \frac{am_i}{a - 2m_i d}$$
, respectively, as shown in Table 5 and Table 6:

Table 5

| $i_{1,2}^{(1)}$ | 0 | 1 | 2 | 3 | 4 | 5 | 6 | 7 |
|---|---|---|---|---|---|---|---|---|
| $m^{(1)}$ | $\frac{1}{32}$ | $\frac{1}{30}$ | $\frac{1}{28}$ | $\frac{1}{26}$ | $\frac{1}{24}$ | $\frac{1}{22}$ | $\frac{1}{20}$ | $\frac{1}{18}$ |
| $i_{1,2}^{(1)}$ | 8 | 9 | 10 | 11 | 12 | 13 | 14 | 15 |
| $m^{(1)}$ | $\frac{1}{16}$ | $\frac{1}{14}$ | $\frac{1}{12}$ | $\frac{1}{10}$ | $\frac{1}{8}$ | $\frac{1}{6}$ | $\frac{1}{4}$ | $\frac{1}{2}$ |

Table 6

| $i_{1,2}^{(2)}$ | 0 | 1 | 2 | 3 | 4 | 5 | 6 | 7 |
|---|---|---|---|---|---|---|---|---|
| $m^{(2)}$ | $\frac{1}{8}$ | $\frac{1}{7}$ | $\frac{1}{6}$ | $\frac{1}{5}$ | $\frac{1}{4}$ | $\frac{1}{3}$ | $\frac{1}{2}$ | 1 |

When the precoding matrix is formed of a first vector and a second vector, the vector $v_{l,m}$ used for forming the precoding matrix is constructed from the first vector $v_{l^{(1)},m^{(1)}}$ and the second vector $v_{l^{(2)},m^{(2)}}$ according to Formula (6-1):

$$v_{l,m} = v_{l^{(1)},m^{(1)}} \otimes v_{l^{(2)},m^{(2)}} \qquad (6\text{-}1).$$

In Formula (6-1), $a \otimes b$ represents the Kronecker product of two vectors $a,b$. The first vector $v_{l^{(1)},m^{(1)}}$ and the

second vector $v_{l(2),m(2)}$ are generated by the first function $f_1(l^{(1)},m^{(1)})$ and the second function $f_2(l^{(2)},m^{(2)})$. Two example sets of the first function $f_1(l,m)$ and the second function $f_2^{(l,m)}$ are given below.

$$f_1(l,m) = \left[ e^{j\pi\frac{(1-l^2)}{m\lambda}} \quad e^{j\pi\left[\frac{(1-l^2)}{m\lambda} - \frac{2dl}{\lambda} + \frac{2d^2m}{\lambda}\right]} \quad \ldots \quad e^{j\pi\left[\frac{(1-l^2)}{m\lambda} - \frac{2(n_1-1)dl}{\lambda} + \frac{2(n_1-1)^2 d^2m}{\lambda}\right]} \quad \ldots \quad e^{j\pi\left[\frac{(1-l^2)}{m\lambda} - \frac{2(N_1-1)dl}{\lambda} + \frac{2(N_1-1)^2 d^2m}{\lambda}\right]} \right]^T \tag{6-2}$$

$$f_2(l,m) = \left[ e^{j\pi\frac{(1-l^2)}{m\lambda}} \quad e^{j\pi\left[\frac{(1-l^2)}{m\lambda} - \frac{2dl}{\lambda} + \frac{2d^2m}{\lambda}\right]} \quad \ldots \quad e^{j\pi\left[\frac{(1-l^2)}{m\lambda} - \frac{2(n_2-1)dl}{\lambda} + \frac{2(n_2-1)^2 d^2m}{\lambda}\right]} \quad \ldots \quad e^{j\pi\left[\frac{(1-l^2)}{m\lambda} - \frac{2(N_2-1)dl}{\lambda} + \frac{2(N_2-1)^2 d^2m}{\lambda}\right]} \right]^T \tag{6-3}$$

$$f_1(l,m) = \left[ e^{j\pi\frac{(1-l^2)}{m}} \quad e^{j\pi\left[\frac{(1-l^2)}{m} - l + \frac{m}{2}\right]} \quad \ldots \quad e^{j\pi\left[\frac{(1-l^2)}{m} - (n_1-1)l + (n_1-1)^2\frac{m}{2}\right]} \quad \ldots \quad e^{j\pi\left[\frac{(1-l^2)}{m} - (N_1-1)l + (N_1-1)^2\frac{m}{2}\right]} \right]^T \tag{6-4}$$

$$f_2(l,m) = \left[ e^{j\pi\frac{(1-l^2)}{m}} \quad e^{j\pi\left[\frac{(1-l^2)}{m} - l + \frac{m}{2}\right]} \quad \ldots \quad e^{j\pi\left[\frac{(1-l^2)}{m} - (n_2-1)l + (n_2-1)^2\frac{m}{2}\right]} \quad \ldots \quad e^{j\pi\left[\frac{(1-l^2)}{m} - (N_2-1)l + (N_2-1)^2\frac{m}{2}\right]} \right]^T \tag{6-5}$$

Formulas (6-2) and (6-3) are the first example set of functions $f_1(l,m)$ and $f_2(l,m)$, and Formulas (6-4) and (6-5) are the second example set of functions $f_1(l,m)$ and $f_2(l,m)$. In the above four formulas, j represents an imaginary unit, $\lambda$ represents the wavelength of the measurement reference signal, and d represents the array element pitch at the transmitting end. When the first vector and the second vector are generated by the first function $f_1(l,m)$ and the second function $f_2(l,m)$, $f_1(l,m)$ is a vector including N1 elements, where at least one element is the product of the first parameter and $n_1$ and/or the product of the second parameter and the square of $n_1$, and $n_1$ is the index of the element in the first vector; $f_2(l,m)$ is a vector including N2 elements, where at least one element is the product of the first parameter and $n_2$ and/or the product of the second parameter and the square of $n_2$, and $n_2$ is the index of the element in the second vector.

An embodiment of the present application further provides a channel information acquisition apparatus. FIG. 3 is a block diagram of a channel information acquisition apparatus according to an embodiment of the present application. This embodiment is applied by a first communication node. As shown in FIG. 3, the channel information acquisition apparatus in this embodiment includes a receiving module 310, a selection module 320, and a reporting module 330.

The receiving module 310 is configured to receive a measurement reference signal.

The selection module 320 is configured to select a precoding matrix from a codebook according to the received measurement reference signal, where the precoding matrix is formed of vectors, a vector of the vectors is generated by a function, a first parameter and a second parameter in the function belong to a first candidate set and a second candidate set, respectively, and when elements in the second candidate set are arranged in sequence, the difference between two adjacent elements is different.

The reporting module 330 is configured to report the precoding matrix to a second communication node.

In an embodiment, the vectors include a first vector. Correspondingly, the first vector is generated by a first function, and the first function is defined by a first set of a first parameter and a second parameter.

In an embodiment, the precoding matrix is formed of the first preset number of first vectors, and the first preset number is an integer not less than 1.

In an embodiment, the vectors include a first vector and a second vector. Correspondingly, the first vector is generated by a first function, and the second vector is generated by a second function. The first function is defined by a first set of a first parameter and a second parameter, the second function is defined by a second set of a first parameter and a second parameter, and the second parameter in the first set of a first parameter and a second parameter and the second parameter in the second set of a first parameter and a second parameter belong to different second candidate sets, respectively.

In an embodiment, the precoding matrix is formed of the second preset number of first vectors and the third preset number of second vectors, and the second preset number and the third preset number are each an integer not less than 1.

In an embodiment, the reporting module 330 is configured to: report the precoding matrix in the form of an index to the second communication node; or report the value of each element in the precoding matrix to the second communication node.

In an embodiment, when the elements in the second candidate set are arranged in sequence, the difference between the reciprocals of two adjacent elements in the second candidate set is a constant value.

In an embodiment, when the elements in the second candidate set are arranged in ascending order, each element in the second candidate set is acquired based on the preceding element of a current element.

In an embodiment, each element in the second candidate set is acquired in the following manner:

$$m_{i+1} = \frac{am_i}{a - 2m_i d}.$$

In the above formula, $a$ represents a real number whose value range is [-1, 0) or (0, *1]*, $d$ represents a real number whose value range is $(0, \frac{1}{2m_1})$, and $m_1$ $a$ represents the minimum element in the second candidate set.

In an embodiment, the minimum element in the second candidate set is determined according to adjacent two of the dimension of the vector, the wavelength of the measurement reference signal and the antenna array aperture of the second communication node.

In an embodiment, the minimum element in the second candidate set is determined according to adjacent two of the dimension of the first vector, the wavelength of the measurement reference signal and the antenna array aperture of the second communication node.

In an embodiment, the different second candidate sets include a first second candidate set and a second second candidate set. The minimum element in the first second candidate set is determined according to adjacent two of the dimension of the first vector, the wavelength of the measurement reference signal and the antenna array aperture of the second communication node, and the minimum element in the second second candidate set is determined according to adjacent two of the dimension of the second vector, the wavelength of the measurement reference signal and the antenna array aperture of the second communication node.

In an embodiment, the value of the minimum element is determined in the following manner.

The product of the square of the dimension of the vector and a first preset coefficient is multiplied by the wavelength of the measurement reference signal to obtain a first target value.

The reciprocal of the first target value is taken as the value of the minimum element.

In an embodiment, the value of the minimum element is determined in the following manner.

The product of the square of the antenna array aperture and a second preset coefficient is taken as a second target value.

The ratio of the wavelength of the measurement reference signal to the second target value is taken as the value of the minimum element.

In an embodiment, the first vector and the second vector each include at least one element. The at least one element is the product of the first parameter and an index and/or the product of the second parameter and the square of an index. The index is the index of an element in the first vector or the second vector, and the value of the index starts from 0.

The channel information acquisition apparatus provided in this embodiment is configured to perform the channel information acquisition method applied by the first communication node in the embodiment shown in FIG. 1. The implementation principles and technical effects of the channel information acquisition apparatus provided in this embodiment are similar to those of the channel information acquisition method applied by the first communication node, and the details are not repeated here.

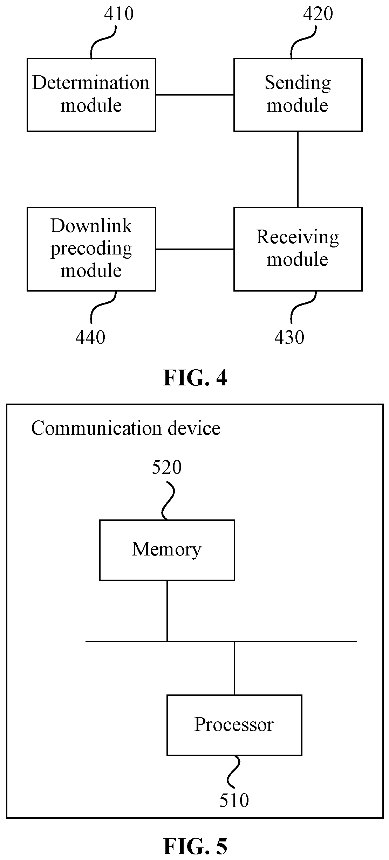

An embodiment of the present application further provides another channel information acquisition apparatus. FIG. 4 is a block diagram of another channel information acquisition apparatus according to an embodiment of the present application. This embodiment is applied by a second communication node. As shown in FIG. 4, the channel information acquisition apparatus in this embodiment includes a determination module 410, a sending module 420, a receiving module 430, and a downlink precoding module 440.

The determination module 410 is configured to determine a measurement reference signal.

The sending module 420 is configured to send the measurement reference signal to a first communication node.

The receiving module 430 is configured to receive a precoding matrix sent by the first communication node, where the precoding matrix is formed of vectors, a vector of the vectors is generated by a function, a first parameter and a second parameter in the function belong to a first candidate set and a second candidate set, respectively, and when elements in the second candidate set are arranged in sequence, the difference between two adjacent elements is different.

The downlink precoding module 440 is configured to use the precoding matrix for downlink precoding.

In an embodiment, the vectors include a first vector. Correspondingly, the first vector is generated by a first function, and the first function is defined by a first set of a first parameter and a second parameter.

In an embodiment, the precoding matrix is formed of the first preset number of first vectors, and the first preset number is an integer not less than 1.

In an embodiment, the vectors include a first vector and a second vector. Correspondingly, the first vector is generated by a first function, and the second vector is generated by a second function. The first function is defined by a first set of a first parameter and a second parameter, the second function is defined by a second set of a first parameter and a second parameter, and the second parameter in the first set of a first parameter and a second parameter and the second parameter in the second set of a first parameter and a second parameter belong to different second candidate sets, respectively.

In an embodiment, the precoding matrix is formed of the second preset number of first vectors and the third preset number of second vectors, and the second preset number and the third preset number are each an integer not less than 1.

In an embodiment, the reporting module 330 is configured to: report the precoding matrix in the form of an index to the second communication node; or report the value of each element in the precoding matrix to the second communication node.

In an embodiment, when the elements in the second candidate set are arranged in sequence, the difference between the reciprocals of two adjacent elements in the second candidate set is a constant value.

In an embodiment, when the elements in the second candidate set are arranged in ascending order, each element in the second candidate set is acquired based on the preceding element of a current element.

In an embodiment, each element in the second candidate set is acquired in the following manner:

$$m_{i+1} = \frac{am_i}{a - 2m_i d}.$$

In the above formula, $a$ represents a real number whose value range is [-1, 0) or (0, 1], $d$ represents a real number whose value range is $(0, \frac{1}{2m_1})$, and $m_1$ represents the minimum element in the second candidate set.

In an embodiment, the minimum element in the second candidate set is determined according to adjacent two of the dimension of the vector, the wavelength of the measurement reference signal and the antenna array aperture of the second communication node.

In an embodiment, the minimum element in the second candidate set is determined according to adjacent two of the dimension of the first vector, the wavelength of the measurement reference signal and the antenna array aperture of the second communication node.

In an embodiment, the different second candidate sets include a first second candidate set and a second second candidate set. The minimum element in the first second candidate set is determined according to adjacent two of the dimension of the first vector, the wavelength of the measurement reference signal and the antenna array aperture of the second communication node, and the minimum element in the second second candidate set is determined according to adjacent two of the dimension of the second vector, the wavelength of the measurement reference signal and the antenna array aperture of the second communication node.

In an embodiment, the value of the minimum element is determined in the following manner.

The product of the square of the dimension of the vector and a first preset coefficient is multiplied by the wavelength of the measurement reference signal to obtain a first target value.

The reciprocal of the first target value is taken as the value of the minimum element.

In an embodiment, the value of the minimum element is determined in the following manner.

The product of the square of the antenna array aperture and a second preset coefficient is taken as a second target value.

The ratio of the wavelength of the measurement reference signal to the second target value is taken as the value of the minimum element.

In an embodiment, the first vector and the second vector each include at least one element. The at least one element is the product of the first parameter and an index and/or the product of the second parameter and the square of an index. The index is the index of an element in the first vector or the second vector, and the value of the index starts from 0.

The channel information acquisition apparatus provided in this embodiment is configured to perform the channel information acquisition method applied by the second communication node in the embodiment shown in FIG. 2. The implementation principles and technical effects of the channel information acquisition apparatus provided in this embodiment are similar to those of the channel information acquisition method applied by the second communication node, and the details are not repeated here.

An embodiment of the present application further provides a communication device. FIG. 5 is a structural diagram of a communication device according to an embodiment of the present application. As shown in FIG. 5, the communication device provided by the present application includes a processor 510 and a memory 520. The number of processors 510 in the communication device may be one or more, and one processor 510 is illustrated as an example in FIG. 5. The number of memories 520 in the communication device may be one or more, and one memory 520 is illustrated as an example in FIG. 5. The processor 510 and the memory 520 of the communication device may be connected via a bus or in other manners, and the connection via a bus is illustrated as an example in FIG. 5. In this embodiment, the communication device may be a first communication node or a second communication node.

As a computer-readable storage medium, the memory 520 may be configured to store software programs, computer-executable programs, and modules such as program instructions/modules corresponding to the device of any embodiment of the present application (for example, the receiving module 310, the selection module 320, and the reporting module 330 in the channel information acquisition apparatus). The memory 520 may include a program storage region and a data storage region. The program storage region may store an operating system and an application program required by at least one function. The data storage region may store data created according to the use of the device. In addition, the memory 520 may include a high-speed random-access memory and may further include a non-volatile memory, such as at least one disk memory, a flash memory, or another non-volatile solid-state memory. In some examples, the memory 520 may further include memories remotely disposed relative to the processor 510, and these remote memories may be connected to the device via a network. Examples of the preceding network include, but are not limited to, the Internet, an intranet, a local area network, a mobile communication network, and a combination thereof.

In the case where the communication device is the first communication node, the device may be configured to perform the channel information acquisition method applied by the first communication node according to any preceding embodiment and has corresponding functions and effects.

In the case where the communication device is the second communication node, the device may be configured to perform the channel information acquisition method applied by the second communication node according to any preceding embodiment and has corresponding functions and effects.

An embodiment of the present application further provides a storage medium. The storage medium stores a computer program which, when executed by a processor, causes the processor to perform the channel information acquisition method according to any embodiment of the present application.

Optionally, the channel information acquisition method applied by the first communication node includes: receiving a measurement reference signal; selecting a precoding matrix from a codebook according to the received measurement reference signal, where the precoding matrix is formed of vectors, a vector of the vectors is generated by a function, a first parameter and a second parameter in the function belong to a first candidate set and a second candidate set, respectively, and when elements in the second candidate set are arranged in sequence, the difference between two adjacent elements is different; and reporting the precoding matrix to the second communication node.

The channel information acquisition method applied by the second communication node includes: determining a measurement reference signal; sending the measurement reference signal to the first communication node; receiving a precoding matrix sent by the first communication node, where the precoding matrix is formed of vectors, a vector of the vectors is generated by a function, a first parameter and a second parameter in the function belong to a first candidate set and a second candidate set, respectively, and when elements in the second candidate set are arranged in sequence, the difference between two adjacent elements is different; and using the precoding matrix for downlink precoding.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared or semiconductor system, apparatus or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included in the computer-readable medium may be transmitted by using any suitable medium including, but not limited to, a wireless medium, a wire, an optical cable, a radio frequency (RF), or any suitable combination thereof.

Computer program codes for executing the operations of the present application may be written in one or more programming languages or a combination of multiple programming languages. The programming languages include object-oriented programming languages (such as Java, Smalltalk, and C++) and conventional procedural programming languages (such as "C" or similar programming languages). The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer via any type of network (including a local area network (LAN) or a wide area network (WAN)) or may be connected to an external computer (for example, via the Internet provided by an Internet service provider).

The preceding are example embodiments of the present application and are not intended to limit the scope of the present application.

It is to be understood by those skilled in the art that the term "user equipment" encompasses any suitable type of wireless user device, such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

The detailed description of example embodiments of the present application is provided above through exemplary and non-restrictive examples. However, considering the drawings and the claims, various modifications and adjustments to the preceding embodiments are apparent to those skilled in the art and do not deviate from the scope of the present application. Accordingly, the proper scope of the present application is determined according to the claims.

**Claims**

1. A channel information acquisition method, applied by a first communication node, comprising:

    receiving a measurement reference signal;
    selecting a precoding matrix from a codebook according to the received measurement reference signal, wherein the precoding matrix is formed of vectors, a vector of the vectors is generated by a function, a first parameter and a second parameter in the function belong to a first candidate set and a second candidate set, respectively, and when elements in the second candidate set are arranged in sequence, differences between every two adjacent elements are different; and
    reporting the precoding matrix to a second communication node.

2. The channel information acquisition method of claim 1, wherein the vectors comprise a first vector, the first vector is generated by a first function, and the first function is defined by a first set of a first parameter and a second parameter.

3. The channel information acquisition method of claim 2, wherein the precoding matrix is formed of a first preset number of first vectors, and the first preset number is an integer not less than 1.

4. The channel information acquisition method of claim 1, wherein the vectors comprise a first vector and a second vector, the first vector is generated by a first function, the second vector is generated by a second function, the first function is defined by a first set of a first parameter and a second parameter, the second function is defined by a second set of a first parameter and a second parameter, and the second parameter in the first set of the first parameter and the second parameter and the second parameter in the second set of the first parameter and the second parameter belong to different second candidate sets, respectively.

5.  The channel information acquisition method of claim 4, wherein the precoding matrix is formed of a second preset number of first vectors and a third preset number of second vectors, and the second preset number and the third preset number are each an integer not less than 1.

6.  The channel information acquisition method of claim 1, wherein reporting the precoding matrix to the second communication node comprises one of:

    reporting the precoding matrix in a form of an index to the second communication node; or
    reporting a value of each element in the precoding matrix to the second communication node.

7.  The channel information acquisition method of claim 1, wherein when the elements in the second candidate set are arranged in sequence, a difference between reciprocals of two adjacent elements in the second candidate set is a constant value.

8.  The channel information acquisition method of claim 7, wherein when the elements in the second candidate set are arranged in ascending order, each element in the second candidate set is acquired based on a preceding element.

9.  The channel information acquisition method of claim 8, wherein each element in the second candidate set is acquired in the following manner:

$$m_{i+1} = \frac{am_i}{a - 2m_i d}$$

wherein $a$ represents a real number whose value range is [-1, 0) or (0, 1], $d$ represents a real number whose value range is $(0, \frac{1}{2m_1})$, and $m_1$ represents a minimum element in the second candidate set.

10. The channel information acquisition method of claim 1 or 9, wherein the minimum element in the second candidate set is determined according to adjacent two of a dimension of the vector, a wavelength of the measurement reference signal and an antenna array aperture of the second communication node.

11. The channel information acquisition method of claim 2, wherein a minimum element in the second candidate set is determined according to adjacent two of a dimension of the first vector, a wavelength of the measurement reference signal and an antenna array aperture of the second communication node.

12. The channel information acquisition method of claim 4, wherein the different second candidate sets comprise a first second candidate set and a second second candidate set, a minimum element in the first second candidate set is determined according to adjacent two of a dimension of the first vector, a wavelength of the measurement reference signal and an antenna array aperture of the second communication node, and a minimum element in the second second candidate set is determined according to adjacent two of a dimension of the second vector, a wavelength of the measurement reference signal and an antenna array aperture of the second communication node.

13. The channel information acquisition method of claim 10, wherein a value of the minimum element is determined in the following manner:

    multiplying a product of a square of the dimension of the vector and a first preset coefficient by the wavelength of the measurement reference signal to obtain a first target value; and
    taking a reciprocal of the first target value as the value of the minimum element.

14. The channel information acquisition method of claim 10, wherein a value of the minimum element is determined in the following manner:

taking a product of a square of the antenna array aperture and a second preset coefficient as a second target value; and
taking a ratio of the wavelength of the measurement reference signal to the second target value as the value of the minimum element.

15. The channel information acquisition method of claim 4, wherein the first vector and the second vector each comprise at least one element, the at least one element is at least one of a product of the first parameter and an index or a product of the second parameter and a square of an index, the index is an index of an element in the first vector or the second vector, and a value of the index starts from 0.

16. A channel information acquisition method, applied by a second communication node, comprising:

determining a measurement reference signal;
sending the measurement reference signal to a first communication node;
receiving a precoding matrix sent by the first communication node, wherein the precoding matrix is formed of vectors, a vector of the vectors is generated by a function, a first parameter and a second parameter in the function belong to a first candidate set and a second candidate set, respectively, and when elements in the second candidate set are arranged in sequence, differences between every two adjacent elements are different; and
using the precoding matrix for downlink precoding.

17. A communication device, comprising a memory and at least one processor; wherein

the memory is configured to store at least one program; and
when the at least one program is executed by the at least one processor, the at least one processor is caused to perform the channel information acquisition method of any one of claims 1 to 15 or the channel information acquisition method of claim 16.

18. A storage medium storing a computer program which, when executed by a processor, causes the processor to perform the channel information acquisition method of any one of claims 1 to 15 or the channel information acquisition method of claim 16.

| Receive a measurement reference signal | S110 |

| Select a precoding matrix from a codebook according to the received measurement reference signal | S120 |

| Report the precoding matrix to a second communication node | S130 |

**FIG. 1**

| Determine a measurement reference signal | S210 |

| Send the measurement reference signal to a first communication node | S220 |

| Receive a precoding matrix sent by a first communication node | S230 |

| Use the precoding matrix for downlink precoding | S240 |

**FIG. 2**

310

320

330

| Receiving module | Selection module | Reporting module |

**FIG. 3**

410                                    420

| Determination module |———| Sending module |

| Downlink precoding module |———| Receiving module |

440                                    430

**FIG. 4**

Communication device

520

| Memory |

| Processor |

510

**FIG. 5**

## INTERNATIONAL SEARCH REPORT

| International application No. |
| --- |
| **PCT/CN2023/136315** |

### A. CLASSIFICATION OF SUBJECT MATTER

H04B 7/0456(2017.01)i

According to International Patent Classification (IPC) or to both national classification and IPC

### B. FIELDS SEARCHED

Minimum documentation searched (classification system followed by classification symbols)

IPC: H04B, H04L, H04W

Documentation searched other than minimum documentation to the extent that such documents are included in the fields searched

Electronic data base consulted during the international search (name of data base and, where practicable, search terms used)

CNTXT, VCN, ENTXT, DWPI, CNKI, 3GPP: 预编码矩阵, 向量, 距离, 差值, 步长, 近场码本, 函数, 参数, precoding w matrix, vector, distance, difference, step w size, near-field w codebook, function, parameter

### C. DOCUMENTS CONSIDERED TO BE RELEVANT

| Category* | Citation of document, with indication, where appropriate, of the relevant passages | Relevant to claim No. |
| --- | --- | --- |
| A | CN 106953672 A (ZTE CORP.) 14 July 2017 (2017-07-14) description, paragraphs [0060]-[0082] | 1-18 |
| A | CN 115315906 A (HUAWEI TECHNOLOGIES CO., LTD.) 08 November 2022 (2022-11-08) entire document | 1-18 |
| A | CN 114142899 A (COMBA NETWORK SYSTEMS CO., LTD.) 04 March 2022 (2022-03-04) entire document | 1-18 |
| A | US 2015280798 A1 (CHINA ACADEMY OF TELECOMMUNICATIONS TECHNOLOGY) 01 October 2015 (2015-10-01) entire document | 1-18 |
| A | HUAWEI. "R1-072316 MU-MIMO codebook and associated DL control signalling" *TSG RAN WG1 meeting #49,* 11 May 2007 (2007-05-11), entire document | 1-18 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 February 2024** | **21 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/136315**

| Patent document cited in search report | | | Publication date (day/month/year) | Patent family member(s) | | | Publication date (day/month/year) |
|---|---|---|---|---|---|---|---|
| CN | 106953672 | A | 14 July 2017 | US | 2019020396 | A1 | 17 January 2019 |
| | | | | EP | 3402089 | A1 | 14 November 2018 |
| | | | | WO | 2017118443 | A1 | 13 July 2017 |
| CN | 115315906 | A | 08 November 2022 | WO | 2021203373 | A1 | 14 October 2021 |
| CN | 114142899 | A | 04 March 2022 | | None | | |
| US | 2015280798 | A1 | 01 October 2015 | EP | 2913949 | A1 | 02 September 2015 |
| | | | | WO | 2014067461 | A1 | 08 May 2014 |

Form PCT/ISA/210 (patent family annex) (July 2022)